# EUROPÄISCHE PATENTSCHRIFT

(11) **EP 2 939 909 B1**
(45) Veröffentlichungstag und Bekanntmachung des Hinweises auf die Patenterteilung: **24.10.2018**
(21) Anmeldenummer: 15165865.5
(22) Anmeldetag: 30.04.2015
(51) Int. Cl.: B62J 1/08, B62J 1/04, B62K 19/40, B62J 6/04

(54) **SATTELSTÜTZE ZUM AUFNEHMEN EINES SITZSATTELS**
SADDLE SUPPORT FOR RECEIVING A SEAT SADDLE
SUPPORT DE SELLE POUR LA RÉCEPTION D'UN SIÈGE D'UNE SELLE

(30) Priorität: 03.05.2014 DE 202014003745 U
(43) Veröffentlichungstag der Anmeldung: 04.11.2015
(73) Patentinhaber: Derby Cycle Werke GmbH, 49661 Cloppenburg (DE)
(72) Erfinder: Tisch, Thadeus, 70197 Stuttgart (DE)
(74) Vertreter: Jabbusch, Matthias

(56) Entgegenhaltungen:
- EP-A1- 1 803 635
- WO-A1-2012/119650
- CN-U- 202 022 281
- CN-Y- 2 130 740
- CN-Y- 200 945 883
- DE-A1-102013 203 065
- DE-C- 107 687
- DE-T2- 60 309 188
- FR-A1- 2 793 758
- GB-A- 328 023
- GB-A- 960 107
- IT-A1- MI20 111 167
- TW-U- M 392 793
- TW-U- M 403 472
- US-A- 5 020 851

## Beschreibung

Die Erfindung betrifft eine Sattelstütze zum Aufnehmen eines Sitzsattels und zum Verbinden desselben mit dem Aufbau eines Fahrzeuges, insbesondere mit dem Rahmen eines Fahrrades, umfassend zumindest einen Schaft.

Bei zweirädrigen Fahrzeugen werden für die Benutzung des Fahrzeuges dem Benutzer ein Lenker sowie ein Sitzsattel angeboten. Der Benutzer kann auf dem Sitzsattel aufsitzen, seine Hände legt er auf den freien Enden des Lenkers ab. Für den Sitzsattel ist dann eine gattungsgemäße Sattelstütze vorgesehen, die den Sitzsattel mit dem Aufbau des Fahrzeuges verbindet, bei einem Fahrrad mit dem Fahrradrahmen verbindet. Die Sattelstütze besteht im Wesentlichen aus dem Schaft, dieser ist ein Stück weit in den Aufbau des Fahrzeuges einsteckbar und dort durch Aufbringen einer Klemmkraft festlegbar, während auf dem oberen freien Ende des Schaftes der Sitzsattel angeordnet ist.

Neben starren Schäften sind bereits eine Vielzahl von einander verschiedenen gefederten Schäften für Sattelstützen vorgeschlagen worden. Bekannte Schäfte sind zum Teil mehrteilig ausgebildet, um mit ihnen Feder- bzw. Dämpfungselemente auszubilden. Es wurden auch schon gefederte Sattelstützen mit Parallelogrammmechaniken vorgeschlagen oder aus der DE 200 15 777 U1 das Einsetzen von Elastomerblöcken in den Verlauf eines Schaftes.

Sattelstützen mit eingesetzten Feder- oder Dämpfungselementen sind entsprechend kompliziert ausgebildet. Auch eine Sattelstütze mit einer Parallelogrammmechanik weist mehrere Bauteile auf und ist entsprechend kompliziert und teuer.

Die Dokumente DE102013203065 A1, CN202022281 U und CN2130740 Y offenbaren jeweils eine Sattelstütze mit den Merkmalen des Oberbegriffs von Anspruch 1. Der Erfindung liegt die Aufgabe zugrunde, eine Sattelstütze der eingangs genannten Gattung aufzuzeigen, die unter Beibehalten eines einstückigen Schaftes eine Dämpfungseigenschaft aufweist.
Diese Aufgabe ist erfindungsgemäß dadurch gelöst, dass der Schaft einstückig aus zumindest einem Rohrabschnitt und aus einem Abschnitt mit zumindest zwei in einem Abstand zueinander angeordneten Schaftteilabschnitten ausgebildet ist.
Bei der erfindungsgemäßen Sattelstütze ist kein mehrteiliger Schaft vorgesehen, dieser bleibt einstückig. Er weist aber einen besonderen Abschnitt auf, in dem der Schaft aus Schaftteilabschnitten ausgebildet ist. Diese Schaftteilabschnitte sind in einem Abstand zueinander angeordnet. Da zumindest zwei Schaftteilabschnitte einen Abschnitt des im Übrigen einteiligen Schaftes ausbilden, sind die Schaftteilabschnitte geringer dimensioniert als der Schaft selbst. Bei den Schaftteilabschnitten ergibt sich aufgrund der geringeren Dimensionierung, insbesondere einer verringerten Querschnittsfläche, eine Sollfederstelle. In diesem Bereich kann der Schaft der Sattelstütze auftretenden Belastungskräften eher nachgeben als in den anderen als Rohrabschnitten ausgebildeten Bereichen. Hinzu kommen die Federeigenschaften, die durch die gewählte Struktur des Materials der Sattelstütze erreicht werden. Dies kann eine Faserstruktur sein, wenn die Sattelstütze aus einem Fasermaterial besteht.
Die erfindungsgemäße Sattelstütze stellt einen konstruktiv einfachen Aufbau dar, sie ermöglicht jedoch die Einbringung einer deutlichen Federwirkung in den Verlauf ihres Schaftes.

Nach einer ersten Weiterbildung der Erfindung sind zwei Schaftteilabschnitte vorgesehen, die zueinander etwa V-förmig angestellt sind. Durch die Ausbildung eines V vergrößert sich der Abstand zwischen den Schaftteilabschnitten in bestimmten Bereichen. Dadurch entsteht hier ein Bauraum, der für die optionale Anbringung eines technischen Gerätes genutzt werden kann. Ein technisches Gerät kann beispielsweise ein Rücklicht sein. Möglich ist aber auch die Anordnung anderer Geräte, wie eines Beschleunigungsmessers oder einer Rückfahrkamera.

Zur Aufnahme eines derartigen technischen Gerätes ist vorgesehen, dass im Raum zwischen beiden Schaftteilabschnitten zusätzlich ein Elastomer angeordnet ist. Dieses dient zur Festsetzung des technischen Gerätes.
Die vorzugsweise zwei Schaftteilabschnitte sind nach einer nächsten Weiterbildung der Erfindung von Rohrabschnitten eingefasst. Beide freien Ende der Schaftteilabschnitte werden somit wieder von einem Rohrabschnitt zusammengefasst. Die Schaftteilabschnitte umrahmen somit ein Auge im Verlauf des Schaftes seitlich.
Nach einer nächsten Weiterbildung der Erfindung ist ein oberhalb der Schaftteilabschnitte angeordneter Rohrabschnitt plattformartig zur Aufnahme von Verbindungsmitteln für den Sitzsattel ausgebildet. Der Abschnitt des Schaftes mit den Schaftteilabschnitten ist außerhalb des Bereiches der Sattelstütze auszubilden, der in den Aufbau des Fahrzeuges eingesteckt wird. Daher ist es vorteilhaft, den Abschnitt mit den Schaftteilabschnitten unmittelbar unterhalb des Sitzsattels angeordnet. Oberhalb der Schaftteilabschnitte kann der Rohrabschnitt dann sogleich plattformartig zur Aufnahme des Sitzsattels ausgebildet sein, entsprechend genormte Verbindungsmittel sind auch mit der erfindungsgemäßen Sattelstütze benutzbar.

Nach der Erfindung ist vorgesehen, dass das Elastomer im Schnitt zwischen den Schaftteilabschnitten als Ringbauteil ausgebildet ist, wobei das Ringbauteil das technische Gerät anliegend umschließt. Das Ringbauteil des Elastomers kann an den einander zugekehrten Innenseiten der Schaftteilabschnitte eng anliegen, weiterhin umschließt es anliegend ein eingelegtes technisches Gerät.

Das technische Gerät kann vorzugsweise Elemente einer Beleuchtungseinrichtung aufweisen, beispielsweise Batterien und LED's. Da der Bereich mit den Schaftteilabschnitten vorzugsweise unmittelbar unterhalb des auf dem Sattelrohr angeordneten Sitzsattels angeordnet ist, eignet sich dieser Bereich auch zum Ausbilden eines z. B. Rücklichts für ein Fahrrad.

Ein Ausführungsbeispiel der Erfindung, aus dem sich weitere erfinderische Merkmale ergeben, ist in der Zeichnung dargestellt. Es zeigen:
Fig. 1: eine erste perspektivische Teilansicht einer erfindungsgemäßen Sattelstütze;
Fig. 2:eine weitere perspektivische Teilansicht der Sattelstütze gemäß Fig. 1, und
Fig. 3: eine Teilschnittansicht der Sattelstütze gemäß Fig.1 .

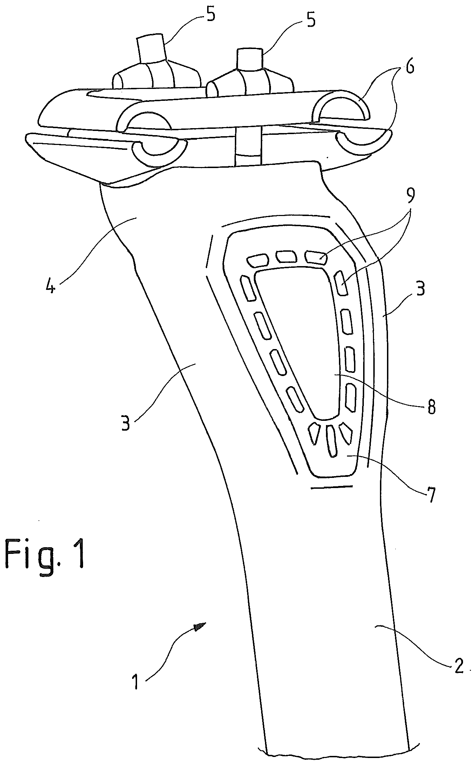

Die Sattelstütze in Fig. 1 weist einen Schaft 1 auf. Der Schaft 1 hat einen Rohrabschnitt 2 sowie oberhalb des Rohrabschnitts 2 zwei Schaftteilabschnitte 3. Oberhalb der Schaftteilabschnitte 3 ist ein weiterer plattformartiger Rohrabschnitt 4 vorgesehen, an dem mit Hilfe von Schrauben 5 Klemmelemente 6 zur Befestigung eines Sitzsattels angeordnet sind.

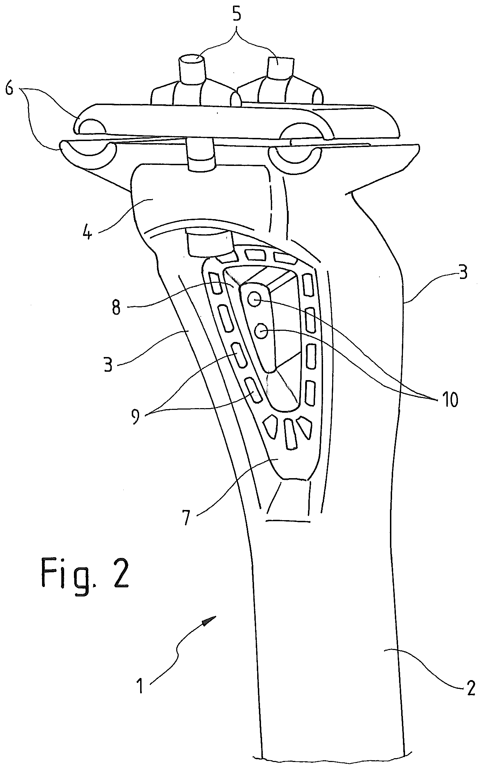

Die beiden Schaftteilabschnitte 3 sind in einer leichten V-Stellung zueinander angeordnet. Sie sind einstückig mit den Rohrabschnitten 2, 4 des Schaftes 1 verbunden. Zwischen beiden Schaftteilabschnitten 3 ist ein Bauraum ausgebildet, dieser ist ausgefüllt durch ein Elastomer 7 sowie durch ein technisches Gerät 8. Das Elastomer 7 ist als Ringbauteil ausgebildet, dieses Ringbauteil umschließt das Gerät 8. Weiterhin sind in das Elastomer 7 Durchbrüche 9 eingebracht.
Diese Durchbrüche 9 sind auch in Fig. 2 erkennbar, sie erstrecken sich durch das gesamte Elastomer 7 hindurch. Fig. 2 zeigt noch, dass im Gerät 8 LED's 10 einer Beleuchtungseinrichtung angeordnet sind.

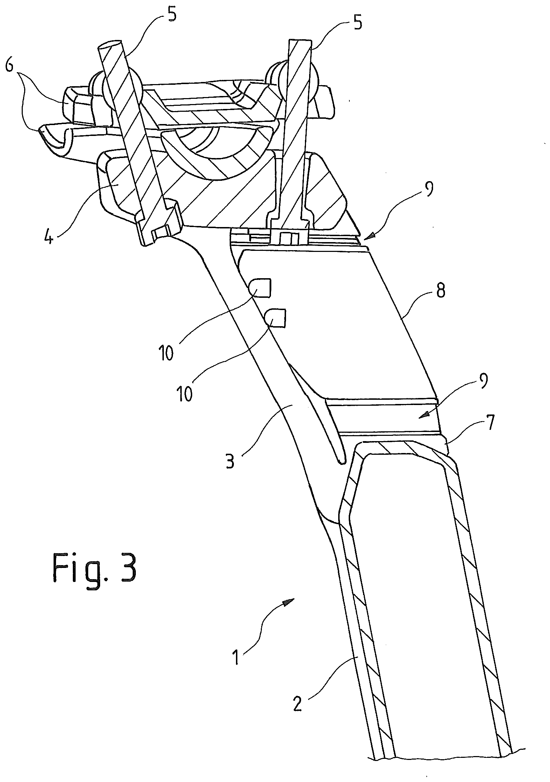

Fig. 3 verdeutlicht noch einmal die Zuordnung von Elastomer 7 mit einem Durchbruch 9, Gerät 8 und LED's 10. Das Gerät 8 kann Batterien, Schaltelemente, lichtempfindliche Elemente und ähnliches für die LED's 10 aufnehmen.

Die Erfindung ist nicht auf die dargestellten Ausführungsbeispiele beschränkt.

## Patentansprüche

1. Sattelstütze zum Aufnehmen eines Sitzsattels und zum Verbinden desselben mit dem Aufbau eines Fahrzeuges, insbesondere mit dem Rahmen eines Fahrrades, umfassend zumindest einen Schaft (1), wobei der Schaft einstückig aus zumindest einem Rohrabschnitt (2, 4) und aus einem Abschnitt mit zumindest zwei in einem Abstand zueinander angeordneten Schaftteilabschnitten (3) ausgebildet ist und zwischen den Schaftteilabschnitten ein als Ringbauteil ausgebildetes Elastomer (7) angeordnet ist, **dadurch gekennzeichnet,**
**dass** zwischen den Schaftteilabschnitten (3) wenigstens ein technisches Gerät (8) derart angeordnet ist, dass das technische Gerät (8) durch das als Ringbauteil ausgebildete Elastomer (7) anliegend umschlossen ist.

2. Sattelstütze nach Anspruch 1, **dadurch gekennzeichnet, dass** zwei Schaftteilabschnitte (3) vorgesehen sind, die zueinander etwa V-förmig angestellt sind.

3. Sattelstütze nach Anspruch 2, **dadurch gekennzeichnet, dass** die Schaftteilabschnitte (3) von Rohrabschnitten (2, 4) eingefasst sind.

4. Sattelstütze nach Anspruch 3, **dadurch gekennzeichnet, dass** ein oberhalb der Schaftteilabschnitte (3) angeordneter Rohrabschnitt (4) plattformartig zur Aufnahme von Verbindungsmitteln für den Sitzsattel ausgebildet ist.

## Claims

1. A saddle support for receiving a seat saddle and for connecting same to the structure of a vehicle, in particular to the frame of a bicycle, comprising at least one shaft (1), the shaft being formed integrally from at least one tubular section (2, 4) and from a section having at least two shaft portions (3) which are spaced from each other, and an elastomer (7) in the form of an annular component being arranged between the shaft portions,
**characterised in that**
at least one technical device (8) is arranged between the shaft portions (3) such that the technical device (8) is enclosed in a tightly-fitting manner by the elastomer (7) in the form of an annular component.

2. The saddle support according to Claim 1,
**characterised in that**
there are two shaft portions (3) which are positioned in an approximately V-shaped manner relative to each other.

3. The saddle support according to Claim 2,
**characterised in that**
the shaft portions (3) are surrounded by tubular sections (2, 4).

4. The saddle support according to Claim 3,
**characterised in that**
a tubular section (4) situated above the shaft portions (3) is platform-like to receive connection means for the seat saddle.

## Revendications

1. Support de selle pour la réception d'une selle et pour l'accouplement de celle-ci avec la structure d'un véhicule, en particulier avec le cadre d'un vélo, comprenant au moins un arbre (1), dans lequel l'arbre est constitué d'une seule pièce à partir d'au moins une section de tube (2, 4) et d'une section comprenant au moins deux sections de partie d'arbre (3) disposées à distance l'une de l'autre, et dans lequel un élastomère conçu comme un élément annulaire (7) est disposé entre les sections de partie d'arbre,
**caractérisé en ce que**
au moins un appareil technique (8) est disposé de telle façon entre les sections de partie d'arbre (3), que l'appareil technique (8) est entouré étroitement par l'élastomère conçu comme un élément annulaire (7).

2. Support de selle selon la revendication 1, **caractérisé en ce qu'**il est prévu deux sections de partie d'arbre (3) calées approximativement en forme de V l'une par rapport à l'autre.

3. Support de selle selon la revendication 2, **caractérisé en ce que** les sections de partie d'arbre (3) sont enserrées par des sections de tube (2, 4).

4. Support de selle selon la revendication 3, **caractérisé en ce qu'**une section de tube (4) disposée au-dessus des sections de partie d'arbre (3) est formée à la manière d'une plateforme pour la réception de moyens d'accouplement pour la selle.
